# EUROPEAN PATENT SPECIFICATION

(11) **EP 2 860 933 B1**
(45) Date of publication and mention of the grant of the patent: **30.11.2016**
(21) Application number: 13306398.2
(22) Date of filing: 10.10.2013
(51) Int. Cl.: H04L 29/06

(54) **Method and device for selecting media streams**
Verfahren und Vorrichtung zur Auswahl von Medien-Streams
Procédé et dispositif de sélection de flux multimédia

(43) Date of publication of application: 15.04.2015
(73) Proprietor: ALCATEL LUCENT, 92100 Boulogne-Billancourt (FR)
(72) Inventor: Delegue, Gérard, 91620 Nozay (FR); Daigremont, Johann, 91620 Nozay (FR)
(74) Representative: ALU Antw Patent Attorneys

(56) References cited:
- US-A1- 2007 076 604
- US-A1- 2008 065 782
- US-A1- 2011 161 485

## Description

### FIELD OF THE INVENTION

The present invention relates to the field of transmission of media streams. In particular, the present invention relates to a method and a device for selecting media streams for transmission to user devices.

### BACKGROUND

A set-top-box is able to deliver multiple media streams to customer premises equipments (e.g. a TV, a recorder...). Thus, for example, a user may watch a first video stream on a TV while a second stream is displayed in an inset window, a third stream is recorded by a recording device and a family member is watching a fourth stream on another display device. However, the access network may not have the required bandwidth to deliver the requested media streams.

It has been proposed to select a sub-set of media streams from the set of streams requested by users, by determining utilities for the requested streams and maximizing the total utility of the selected streams under the constraint that the total throughput of the selected streams is lower than the available bandwidth. In that case, the selection depends on the manner used for determining the utility of a stream, and may not reflect the preferences and expectations of the users.

US 2011/161485 discloses a method for monitoring multiple dynamic media streams playing concurrently on a client computer system. US 2007/076604 discloses a method for relieving congestion in a plurality of multimedia data flows through a network. US 2008/065782 discloses a method of concurrently downloading media items.

### SUMMARY

It is thus an object of embodiments of the present invention to propose a method and a device for selecting media streams, which do not show the inherent shortcomings of the prior art.

Accordingly, embodiments relate to a method for selecting media streams for transmission to at least one user terminal, executed by a selection device, comprising:
- determining values and throughput for media streams of a first set of media streams requested by the at least one user terminal,
- determining a second set of media streams from the first set of media streams, so that a total throughput of the media streams of the second set is lower than an available bandwidth of a data link to said at least one user terminal, and so as to maximize the total value of the media streams of the second set, and
- controlling the transmission of the media streams of the second set to the at least one user terminal,
   wherein the value of a media stream is determined in function of a semantic score, a content delivery score, a media consumption mode score, and an external context score, wherein:
   - the semantic score is determined in function of semantic data representative of the content of the media stream,
   - the content delivery score is determined in function whether the content of the media stream is recorded or is live, and of whether another media stream with the same content but a different resolution is available,
   - the media consumption mode score is determined in function of technical characteristics of the user terminal, of a resolution used for displaying the media stream on the user terminal, and of data representative of whether the media stream is actually visible on the user terminal, and
   - the external context score is determined in function of at least one user ID, of whether a user is detected watching the user terminal, and of a sale price of the media stream.

Correlatively, embodiments relate to a displaying device for selecting media streams for transmission to at least one user terminal, comprising:
- a media stream value estimator for determining values and throughput for media streams of a first set of media streams requested by the at least one user terminal,
- a media stream selector for determining a second set of media streams from the first set of media streams, so that a total throughput of the media streams of the second set is lower than an available bandwidth of a data link to said at least one user terminal, and so as to maximize the total value of the media streams of the second set, and
- a selection enforcement module for controlling the transmission of the media streams of the second set to the at least one user terminal,
   wherein the media stream value estimator is configured for determining the value of a media stream in function of a semantic score, a content delivery score, a media consumption mode score, and an external context score, wherein:
   - the semantic score is determined in function of semantic data representative of the content of the media stream,
   - the content delivery score is determined in function whether the content of the media stream is recorded or is live, and of whether another media stream with the same content but a different resolution is available,
   - the media consumption mode score is determined in function of technical characteristics of the user terminal, of a resolution used for displaying the media stream on the user terminal, and of data representative of whether the media stream is actually visible on the user terminal, and
   - the external context score is determined in function of at least one user ID, of whether a user is detected watching the user terminal, and of a sale price of the media stream.

In one embodiment, the value of a media stream is a weighted average of the semantic score, the content delivery score, the media consumption mode score, and the external context score, the method comprising:
- sending an information element representative of the second set to the user terminal,
- receiving a user feedback from the user terminal,
- updating weights of said weighted average in function of said user feedback.

The method may comprise:
- determining a root cause for a media stream of the first set which is not in the second set, in function of the semantic score, the content delivery score, the media consumption mode score, and the external context score, and
- sending an information element representative of said root cause to said user terminal.

The value of a media stream may be weighted average of the semantic score, the content delivery score, the media consumption mode score, and the external context score, and the root cause may be determined in function of weights of said weighted average.

The selection device may determine at least one of the semantic score, the content delivery score, the media consumption mode score, and the external context score. The selection device may obtain at least one of the semantic score, the content delivery score, the media consumption mode score, and the external context score from another device.

The semantic score may be determined in function of user preferences stored in a user database.

Embodiments also relate to a computer program including instructions adapted to perform said method for selecting media streams when said program is executed by a computer.

### BRIEF DESCRIPTION OF THE DRAWINGS

The above and other objects and features of the invention will become more apparent and the invention itself will be best understood by referring to the following description of embodiments taken in conjunction with the accompanying drawings wherein:
Figure 1 is a schematic view of a system for transmitting media streams,
Figure 2 is a functional view of a selection device of the system of figure 1, and
Figure 3 is a structural view of the selection device of Figure 2.

### DESCRIPTION OF EMBODIMENTS

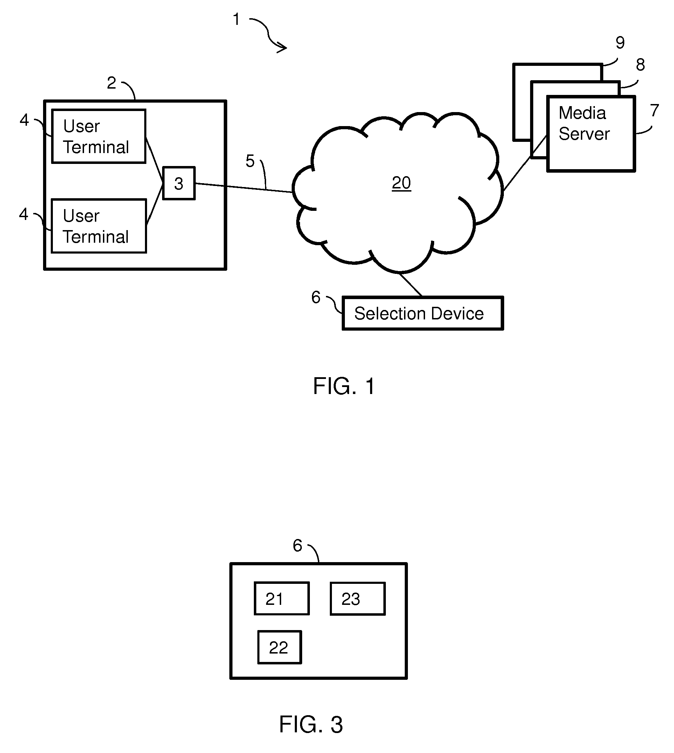

**Figure 1** shows a system 1 for transmitting media streams from a media server 7 to user devices 4, through a network 20. A media stream is for example a video stream, an audio-visual stream or an audio stream, and may also comprise metadata.

The system 1 comprises a gateway 3 and user devices 4 located in user premises 2. The gateway 3 is for example a Set-Top-Box and provides access to the network 20 though a link 5. A user device 4 may be any device capable of displaying and/or recording a media stream, for example a TV, a recording device, a personal computer (desktop, laptop, Smartphone, tablet...). The gateway 3 may be itself a user device 4, for example capable of recording a media stream. By controlling the user devices 4 or the gateway 3, users may request media streams from the media server 7, for displaying and/or recording.

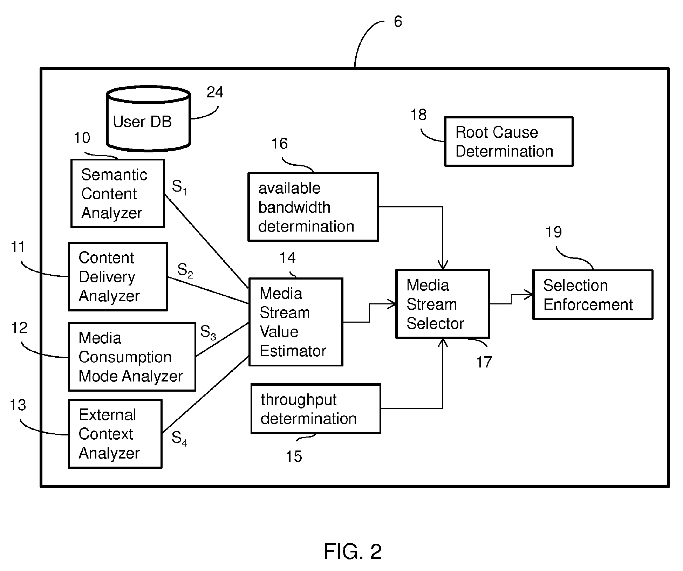

The system 1 also comprises a selecting device 6. The selecting device 6 selects media streams for transmission from the media server 7 to the user devices 4, taking into account the media streams requested by the users and the bandwidth available on the link 5. The selecting device 6 will be described in detail with reference to figure 2. In the example of figure 1, the selecting device 6 is a server connected to the network 20. In other examples, the selecting device 6 may be located in the user premises 2, for example the selecting device 6 may be included in the gateway 3 and/or in one of the user devices 4.

The system 1 also comprises the media server 7, and a content management system 8 and an electronic program guide 9 associated with the media server 7.

The media server 7 transmits media streams in the network 20. The content management system 8 stores and provides metadata related to the media streams available from the media server 7. The metadata stored by the content management system 8 may comprises the throughput and resolution of a media stream, and content type data representative of whether the content of a media stream is live or recorded.

The electronic program guide 9 stores and provides metadata related to the media streams available from the media server 7. The metadata stored by the electronic program guide 9 may comprises a semantic description of the content of the media stream, for example a category, a title, a summary, keywords... and/or scheduling information.

**Figure 2** is a functional view of the selection device 6.

The selection device 6 comprises a semantic content analyzer 10, a content delivery analyzer 11, a media consumption mode analyzer 12, an external context analyzer 13 and a user database 24.

The semantic content analyzer 10 determines a semantic score S₁ for the media streams requested by the users. The semantic score S₁ of a media stream is determined in function of the semantic content of the media stream and, the case may be, of a user profile. Thus, for example, based on a media stream ID or content ID, the semantic content analyzer 10 obtains a semantic description of the content from the electronic program guide 9. The semantic description may include for example a content category (sports, movie, news...), keywords, a title, a summary... The semantic content analyzer 10 determines the semantic score S₁ in function of the semantic description, for example by applying a set of rules. The set of rules may be for example a default classification (e.g. "sports" has a higher score than "news") or depends on user preferences. The user preferences may be stored in a user profile associated with a user ID in the user database 24.

The content delivery analyzer 11 determines a content delivery score S₂ for the media streams requested by the users. The content delivery score S₂ of a media stream is determined in function of the delivery characteristic of the media stream. Thus, the content delivery analyzer 11 obtains the throughputs and resolutions available for a media stream from the content management system 8. This allows identifying whether the same content can be played with a lower resolution from another source (URL). The content delivery analyzer 11 obtains content type data representative of whether the content of a media stream is live or recorded. The content delivery score S₂ is determined in function of the obtained data. For example, the content delivery score S₂ of a media stream for which another stream of the same content but with a lower resolution is available may be lower than if no such alternative stream is available. Also, the content delivery score S₂ of a live media stream may be higher than the content delivery score S₂ of a recorded media stream.

The media consumption mode analyzer 12 determines a media consumption mode score S₃ for the media streams requested by the users. The media consumption mode score S₃ of a media stream is determined in function of the usage of the media stream by the user devices 4. Thus, the media consumption mode analyzer 12 obtains technical characteristics of the user terminals 4 and determines the media consumption mode score S₃ accordingly. For example, a user terminal 4 with a larger screen is considered as the main screen, which is regarded as more important than a user terminal 4 with a smaller screen, or second screen. Therefore a media stream displayed the main screen may have a higher media consumption mode score S₃ than a media stream displayed on the second screen. Also, the resolution used for displaying a media stream may be taken into account. Accordingly, an inadequacy between the resolution of the media stream and the resolution used for display (for example a HD stream displayed in a "Picture in Picture" mode) decreases the media consumption mode score S₃. Finally, the media consumption mode analyzer 12 detects the media streams that are not consumed by the user. For example, the media consumption mode analyzer 12 obtains, from a user terminal 4 data representative of whether a media stream is fully displayed, is displayed in a partially hidden window, or is "displayed" in a hidden window, and determines the media consumption mode score S₃ accordingly.

The external context analyzer 14 determines an external context score S₄ for the media streams requested by the users. The external context score S₄ of a media stream is determined in function of other criteria, independently of the content itself. The external context score S₄ is determined in function of user IDs of the users watching the media stream. For example, a media stream requested by a user "PARENT" may have a higher external context score S₄ than a media stream requested by a user "CHILD". The external context score S₄ is also determined in function of the number of users watching the media stream. For example, a media stream watched by a group of user may have a higher external context score S₄ than a media stream watched by a single user. The external context score S₄ is also determined in function of price data representative of the price paid for the media stream. For example, a media stream with a higher price may have a higher external context score S₄ than a media stream with a lower price.

In the example of figure 2, the selection device 6 includes the semantic content analyzer 10, the content delivery analyzer 11, the consumption mode analyzer 12 and the external context analyzer 13. In other words, the selection device 6 obtains the necessary data and determines the semantic score S₁, the content delivery score S₂, the media consumption mode score S₃ and the external context score S₄ itself. In another embodiment, the selection device 6 obtains at least one of the semantic score S₁, the content delivery score S₂, the media consumption mode score S₃ and the external context score S₄ from another device, for example from a user device 4 or the gateway 3. For example, the semantic content analyzer 10 and the user database 24 may be located in the gateway 3. This avoids storing user profiles in a server and may be perceived better in terms of user privacy. Similarly, the consumption mode analyzer and the external context analyzer 13 may be located in the user terminals 4 or the gateway 3. This avoids disclosing terminal characteristics, usage data, presence data... to an external server.

The selection device 6 also comprises a media stream value estimator 14, a media stream throughput determination module 15, an available bandwidth determination module 16, a media stream selector 17, a root cause determination module 18 and a selection enforcement module 19.

The media stream value estimator 14 determines values for the media streams requested by the users. The value of a media stream is determined in function of its semantic score S₁, its content delivery score S₂, its media consumption mode score S₃ and its external context score S₄. For example, the value of a media stream is a weighted average of the semantic score S₁, the content delivery score S₂, the media consumption mode score S₃ and the external context score S₄ of the media stream. The weights used by the media stream value estimator 14 may be for example fixed, predefined weights, weights configurable by a user, or weights adapted based on user feedback.

The media stream throughput determination module 15 determines throughputs for the media streams requested by the users. The throughput of a media stream is determined for example by a mean on a sliding time window.

The available bandwidth determination module 16 determines the maximum bandwidth available on the link 5, for example by obtaining bandwidth measurements from a measurement module (not shown) located in the gateway 3 and/or the network 20.

The media stream selector 17 selects media streams from the set of media streams requested by the users, in function of the values determined by the media stream value estimator 14, the throughputs determined by the media stream throughput determination module 15 and the maximum bandwidth available on the link 5 provided by the available bandwidth determination module 16. The selection aims at maximizing the total value of the selected media streams, with the constraint that the total throughput of the selected media streams is lower than the available bandwidth of the data link 5. In case the number of requested media streams is not too large, each combination of selected media stream may be evaluated. Otherwise, an approximate solution may be determined by a maximizing algorithm, for example a greedy algorithm: the media selector 17 sorts the media streams in decreasing order of value/throughput ratio. It then proceed to insert them in the set of solution, starting with higher ranking media streams, until there is not enough available bandwidth left for adding more media streams in the solution set.

The selection enforcement module 19 controls the transmission of the selected media streams, as determined by the media stream selector 17, from the media server 7 to the user devices 4. For example, the selection enforcement module 19 sends a command to the gateway 3 and/or the media server 7 to stop the transmission of the non-selected media streams, and to start the transmission of the new selected media streams.

In one embodiment, the selection provided by the media stream selector 17 may be validated by the user before stopping the transmission of the non-selected media streams. For example, the selection enforcement module 19 sends a message for displaying the list of non-selected media stream on one of the user devices 4, and the user approve or reject the list. The non-selected media streams are stopped only if the user approves. The approval or rejection by the user may be used as feedback for modifying the weights used by the media stream value estimator 14.

The root cause determination module 18 determines a root cause for not selecting the non-selected streams. The root cause may be determined in function of the scores S₁ to S₄ and the weights used by the media stream value estimator 14. For example, a low score associated with a high weight is determined to correspond to the root cause for not selecting a media stream. The root cause determination module 18 may send a message indicative of the root cause to the user device 4.

The functioning of the selection device 6 is the following. When a user requests a media stream for one of the user devices 4, the requested media stream is added to a first set of media streams (the requested media streams). Similarly, when a user requests to stop a media stream of one of the user devices 4, the stopped media stream is removed from the first set of media streams. In response to the addition or removal of a media stream in the first set, the selection device 6 selects a second set of media streams (the selected streams) and controls the transmission of the selected media streams from the media server 7 to the user terminals 4. More specifically, the selection device 6 determines scores S₁ to S₄, values and throughputs for the requested media streams, and determines the second set by maximizing the total value with the constraints that the total throughput of the selected media stream is lower than the available bandwidth on the link 5.

Accordingly, in case the total throughput of the requested media streams is higher than the available bandwidth on the link 5, a selection is made based on the values of the media streams. Since the value of a media stream is determined in function of a semantic score S₁, a content delivery score S₂, a media consumption mode score S₃, and an external context score S₄, the value of a media stream reflects the level of expectation of the user to have access to this media stream. Consequently, the value-based selection matches the expectation of the users.

Moreover, in case the weights of the media stream value estimator 14 are determined based on user feedback, the precision of the value of a media stream is improved.

Finally, the root cause determination module 18 allows informing the user about why a specific media stream has not been selected.

The selection device 6 has been described in terms of functional modules, which correspond to steps of a method for selecting media stream according to an embodiment.

**Figure 3** is a structural view of the selection device 6.

The selection device 6 has the material architecture of a computer and comprises a processor 21, a memory 22 and communication interface 23. The processor 21 is capable of executing computer programs stored in the memory 22. The functional module shown of figure 2 may correspond to the execution, by the processor 21, of such a computer program. The communication interface 23 allows communicating with other devices through the network 20.

It is to be remarked that the functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared, for example in a cloud computing architecture. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Their function may be carried out through the operation of program logic, through dedicated logic, through the interaction of program control and dedicated logic, or even manually, the particular technique being selectable by the implementer as more specifically understood from the context.

It should be further appreciated by those skilled in the art that any block diagrams herein represent conceptual views of illustrative circuitry embodying the principles of the invention. Similarly, it will be appreciated that any flow charts represents various processes which may be substantially represented in computer readable medium and so executed by a computer or processor, whether or not such computer or processor is explicitly shown.

Embodiments of the method can be performed by means of dedicated hardware and/of software or any combination of both.

While the principles of the invention have been described above in connection with specific embodiments, it is to be clearly understood that this description is made only by way of example and not as a limitation on the scope of the invention, as defined in the appended claims.

## Claims

1. Method for selecting media streams for transmission to at least one user terminal (4), executed by a selection device (6), comprising:
- determining values and throughput for media streams of a first set of media streams requested by the at least one user terminal (4),
- determining a second set of media streams from the first set of media streams, so that a total throughput of the media streams of the second set is lower than an available bandwidth of a data link (5) to said at least one user terminal (4), and so as to maximize the total value of the media streams of the second set, and
- controlling the transmission of the media streams of the second set to the at least one user terminal (4),
wherein the value of a media stream is determined in function of a semantic score (S₁), a content delivery score (S₂), a media consumption mode score (S₃), and an external context score (S₄), wherein:
- the semantic score (S₁) is determined in function of semantic data representative of the content of the media stream,
- the content delivery score (S₂) is determined in function whether the content of the media stream is recorded or is live, and of whether another media stream with the same content but a different resolution is available,
- the media consumption mode score (S₃) is determined in function of technical characteristics of the user terminal (4), of a resolution used for displaying the media stream on the user terminal (4), and of data representative of whether the media stream is actually visible on the user terminal (4), and
- the external context score (S₄) is determined in function of at least one user ID, of whether a user is detected watching the user terminal (4), and of a sale price of the media stream.

2. Method according to claim 1, wherein the value of a media stream is a weighted average of the semantic score (S₁), the content delivery score (S₂), the media consumption mode score (S₃), and the external context score (S₄), the method comprising:
- sending an information element representative of the second set to the user terminal (4),
- receiving a user feedback from the user terminal (4),
- updating weights of said weighted average in function of said user feedback.

3. Method according to one of claims 1 and 2, comprising:
- determining a root cause for a media stream of the first set which is not in the second set, in function of the semantic score (S₁), the content delivery score (S₂), the media consumption mode score (S₃), and the external context score (S₄), and
- sending an information element representative of said root cause to said user terminal (4).

4. Method according to claim 3, wherein the value of a media stream is a weighted average of the semantic score (S₁), the content delivery score (S₂), the media consumption mode score (S₃), and the external context score (S₄), and wherein said root cause is determined in function of weights of said weighted average.

5. Method according to one of claims 1 to 4, wherein the selection device (6) determines at least one of the semantic score (S₁), the content delivery score (S₂), the media consumption mode score (S₃), and the external context score (S₄).

6. Method according to one of claims 1 to 5, wherein the selection device (6) obtains at least one of the semantic score (S₁), the content delivery score (S₂), the media consumption mode score (S₃), and the external context score (S₄) from another device (3, 4).

7. Method according to one of claims 1 to 6, wherein the semantic score (S₁) is determined in function of user preferences stored in a user database.

8. Computer program including instructions adapted to perform the method according to one of claims 1 to 7 when said program is executed by a computer.

9. Selection device (6) for selecting media streams for transmission to at least one user terminal, comprising:
- a media stream value estimator (14) for determining values and throughput for media streams of a first set of media streams requested by the at least one user terminal (4),
- a media stream selector (17) for determining a second set of media streams from the first set of media streams, so that a total throughput of the media streams of the second set is lower than an available bandwidth of a data link to said at least one user terminal, and so as to maximize the total value of the media streams of the second set, and
- a selection enforcement module (19) for controlling the transmission of the media streams of the second set to the at least one user terminal (6),
wherein the media stream value estimator (14) is configured for determining the value of a media stream in function of a semantic score (S₁), a content delivery score (S₂), a media consumption mode score (S₃), and an external context score (S₄), wherein:
- the semantic score (S₁) is determined in function of semantic data representative of the content of the media stream,
- the content delivery score (S₂) is determined in function whether the content of the media stream is recorded or is live, and of whether another media stream with the same content but a different resolution is available,
- the media consumption mode score (S₃) is determined in function of technical characteristics of the user terminal, of a resolution used for displaying the media stream on the user terminal, and of data representative of whether the media stream is actually visible on the user terminal, and
- the external context score (S₄) is determined in function of at least one user ID, of whether a user is detected watching the user terminal, and of a sale price of the media stream.

## Patentansprüche

1. Verfahren für die Auswahl von Medienstreams zur Übertragung an mindestens ein Benutzerendgerät (4), ausgeführt von einer Auswahlvorrichtung (6), umfassend:
- Bestimmen von Werten und Durchsatz für Medienstreams eines ersten Satzes von Medienstreams, die von mindestens einem Benutzerendgerät (4) angefordert werden,
- Bestimmen eines zweiten Satzes von Medienstreams aus dem ersten Satz von Medienstreams, dergestalt, dass ein Gesamtdurchsatz der Medienstreams des zweiten Satzes niedriger ist als eine verfügbare Bandbreite einer Datenverbindung (5) zu dem besagten, mindestens einen Benutzerendgerät (4), und dergestalt, dass der Gesamtwert der Medienstreams des zweiten Satzes maximiert wird, und
- Steuern der Übermittlung des Medienstreams des zweiten Satzes zu dem mindestens einen Benutzerendgerät (4),
- wobei der Wert eines Medienstreams in Funktion eines Semantik-Score (S₁), eines Inhaltsbereitstellungs-Score (S₂), eines Mediennutzungsmodus-Score (S₃) und eines externen Kontext-Score (S₄) bestimmt wird, wobei:
- der Semantik-Score (S₁) in Funktion semantischer Daten bestimmt wird, die für den Inhalt des Medienstreams stehen,
- der Inhaltsbereitstellungs-Score (S₂) in Funktion der Frage bestimmt wird, ob der Inhalt des Medienstreams aufgezeichnet oder live ist und ob ein anderer Medienstream mit demselben Inhalt doch in anderer Auflösung verfügbar ist,
- der Mediennutzungsmodus-Score (S₃) in Funktion der technischen Eigenschaften des Benutzerendgeräts (4), von einer für das Anzeigen des Medienstreams auf dem Benutzerendgerät (4) verwendeten Auflösung und von Daten bestimmt wird, welche angeben, ob der Medienstream gegenwärtig auf dem Benutzerendgeräts (4) sichtbar ist, und
- der externe Kontext-Score (S₄) in Funktion mindestens einer Benutzer-ID hinsichtlich der Frage bestimmt wird, ob ein Benutzer festgestellt wird, der das Benutzerendgerät (4) im fraglichen Moment sieht, sowie in Funktion des Verkaufspreises des Medienstreams.

2. Verfahren nach Anspruch 1, wobei der Wert eines Medienstreams ein gewichteter Mittelwert aus dem Semantik-Score (S₁), dem Inhaltsbereitstellungs-Score (S₂), dem Mediennutzungsmodus-Score (S₃) und dem externen Kontext-Score (S₄) ist, wobei das Verfahren umfasst:
- das Senden eines den zweiten Satz repräsentierenden Informationselements an das Benutzerendgerät (4),
- den Empfang einer Benutzerrückmeldung von dem Benutzerendgerät (4),
- das Aktualisieren der Gewichtungen besagten gewichteten Mittelwerts in Funktion besagter Benutzerrückmeldung.

3. Das Verfahren nach einem der Ansprüche 1 oder 2, umfassend:
- das Bestimmen einer nicht im zweiten Satz enthaltenen Root-Cause für einen Medienstream des ersten Satzes in Funktion des Semantik-Score (S₁), des Inhaltsbereitstellungs-Score (S₂), des Mediennutzungsmodus-Score (S₃) und des externen Kontext-Score (S₄), und
- das Senden eines besage Root-Cause repräsentierenden Informationselements an das Benutzerendgerät (4).

4. Verfahren nach Anspruch 3, wobei der Wert eines Medienstreams ein gewichteter Mittelwert aus dem Semantik-Score (S₁), dem Inhaltsbereitsteliungs-Score (S₂), dem Mediennutzungsmodus-Score (S₃) und dem externen Kontext-Score (S₄) ist, und wobei besagte Root-Cause in Funktion von Gewichtungen besagten gewichteten Mittelwerts bestimmt wird.

5. Verfahren nach einem der Ansprüche1 bis 4, wobei die Auswahlvorrichtung (6) mindestens entweder den Semantik-Score (S₁), oder den Inhaltsbereitstellungs-Score (S₂), oder den Mediennutzungsmodus-Score (S₃) oder den externen Kontext-Score (S₄) bestimmt.

6. Verfahren nach einem der Ansprüche1 bis 5, wobei die Auswahlvorrichtung (6) mindestens entweder den Semantik-Score (S₁), oder den Inhaltsbereitstellungs-Score (S₂), oder den Mediennutzungsmodus-Score (S₃) oder den externen Kontext-Score (S₄) von einer anderen Vorrichtung (3, 4) abruft.

7. Verfahren nach einem der Ansprüche 1 bis 6, wobei der Semantik-Score (S₁) in Funktion von Benutzerpräferenzen bestimmt wird, die in einer Benutzerdatenbank gespeichert sind.

8. Computerprogramm mit Anweisungen, die dafür ausgelegt sind, um das Verfahren nach einem der Ansprüche 1 bis 7 auszuführen, wenn besagtes Programm auf einem Computer ausgeführt wird.

9. Auswahlvorrichtung (6) für die Auswahl von Medienstreams zur Übertragung an mindestens ein Benutzerendgerät, umfassend:
- einen Medienstreamwert-Schätzer (14) für das Bestimmen von Werten und Durchsatz für Medienstreams eines ersten Satzes von Medienstreams, der von dem mindestens einen Benutzerendgerät (4) angefordert wird.
- Medienstream-Selektor (17) für das Bestimmen eines zweiten Satzes von Medienstreams aus dem ersten Satz von Medienstreams, dergestalt, dass ein Gesamtdurchsatz der Medienstreams des zweiten Satzes niedriger ist als eine verfügbare Bandbreite einer Datenverbindung zu dem besagten, mindestens einen Benutzerendgerät, und dergestalt, dass der Gesamtwert der Medienstreams des zweiten Satzes maximiert wird, und
- ein Auswahldurchführungsmodul (19) für das Steuern der Übermittlung des Medienstreams des zweiten Satzes zu dem mindestens einen Benutzerendgerät (6), wobei der Medienstreamwert-Schätzer (14) konfiguriert ist für das Bestimmen des Werts eines Medienstreams in Funktion eines Semantik-Score (S₁), eines Inhaltsbereitstellungs-Score (S₂), eines Mediennutzungsmodus-Score (S₃) und eines externen Kontext-Score (S₄), wobei:
- der Semantik-Score (S₁) in Funktion semantischer Daten bestimmt wird, die für den Inhalt des Medienstreams stehen,
- der Inhaltsbereitstellungs-Score S₂) in Funktion der Frage bestimmt wird, ob der Inhalt des Medienstreams aufgezeichnet oder live ist und ob ein anderer Medienstream mit demselben Inhalt doch in anderer Auflösung verfügbar ist,
- der Mediennutzungsmodus-Score (S₃) in Funktion der technischen Eigenschaften des Benutzerendgeräts, von einer für das Anzeigen des Medienstreams auf dem Benutzerendgerät verwendeten Auflösung und von Daten bestimmt wird, welche angeben, ob der Medienstream gegenwärtig auf dem Benutzerendgeräts sichtbar ist, und
- der externe Kontext-Score (S₄) in Funktion mindestens einer Benutzer-ID hinsichtlich der Frage bestimmt wird, ob ein Benutzer festgestellt wird, der das Benutzerendgerät (4) im fraglichen Moment sieht, sowie in Funktion des Verkaufspreises des Medienstreams.

## Revendications

1. Procédé de sélection de flux multimédia à transmettre à au moins un terminal utilisateur (4), exécuté par un dispositif de sélection (6), comprenant les étapes suivantes :
- déterminer des valeurs et un débit pour des flux multimédias d'un premier ensemble de flux multimédias demandés par l'au moins un terminal utilisateur (4),
- déterminer un deuxième ensemble de flux multimédia à partir du premier ensemble de flux multimédia, de sorte qu'un débit total des flux multimédias du deuxième ensemble soit inférieur à une bande passante disponible d'une liaison de données (5) vers ledit au moins un terminal utilisateur (4), et de sorte à maximiser la valeur totale des flux multimédias du deuxième ensemble, et
- commander la transmission des flux multimédias du deuxième ensemble vers l'au moins un terminal utilisateur (4),
- dans lequel la valeur d'un flux multimédia est déterminée en fonction d'un score sémantique (S₁), d'un score de distribution de contenu (S₂), d'un score de mode de consommation de contenu multimédia (S₃) et d'un score de contexte externe (S₄), dans lequel :
- le score sémantique (S₁) est déterminé en fonction de données sémantiques représentatives du contenu du flux multimédia,
- le score de distribution de contenu (S₂) est déterminé en fonction du fait que le contenu du flux multimédia est enregistré ou est en direct, et en fonction du fait qu'un autre flux multimédia ayant le même contenu mais une résolution différente est disponible,
- le score de mode de consommation de contenu multimédia (S₃) est déterminé en fonction de caractéristiques techniques du terminal utilisateur (4), d'une résolution utilisée pour afficher le flux multimédia sur le terminal utilisateur (4) et de données représentatives du fait que le flux multimédia est effectivement visible sur le terminal utilisateur (4), et
- le score de contexte externe (S₄) est déterminé en fonction d'au moins une ID utilisateur, du fait qu'un utilisateur est détecté en train de regarder le terminal utilisateur (4) et d'un prix de vente du flux multimédia.

2. Procédé selon la revendication 1, dans lequel la valeur d'un flux multimédia est une moyenne pondérée du score sémantique (S₁), du score de distribution de contenu (S₂), du score de mode de consommation de contenu multimédia (S₃) et du score de contexte externe (S₄), le procédé comprenant les étapes suivantes :
- envoyer un élément d'information représentatif du deuxième ensemble au terminal utilisateur (4),
- recevoir un retour utilisateur provenant du terminal utilisateur (4),
- mettre à jour des poids de ladite moyenne pondérée en fonction dudit retour utilisateur.

3. Procédé selon l'une des revendications 1 et 2, comprenant les étapes suivantes
- déterminer une cause profonde pour un flux multimédia du premier ensemble qui n'est pas dans le deuxième ensemble, en fonction du score sémantique (S₁), du score de distribution de contenu (S₂), du score de mode de consommation de contenu multimédia (S₃) et du score de contexte externe (S₄), et
- envoyer un élément d'information représentatif de ladite cause profonde audit terminal utilisateur (4),

4. Procédé selon la revendication 3, dans lequel la valeur d'un flux multimédia est une moyenne pondérée du score sémantique (S₁), du score de distribution de contenu (S₂), du score de mode de consommation de contenu multimédia (S₃) et du score de contexte externe (S₄) et dans lequel ladite cause profonde est déterminée en fonction des poids de ladite moyenne pondérée.

5. Procédé selon l'une des revendications 1 à 4, dans lequel le dispositif de sélection (6) détermine au moins un score parmi le score sémantique (S₁), le score de distribution de contenu (S₂), le score de mode de consommation de contenu multimédia (S₃) et le score de contexte externe (S₄).

6. Procédé selon l'une des revendications 1 à 5, dans lequel le dispositif de sélection (6) obtient au moins un score parmi le score sémantique (S₁), le score de distribution de contenu (S₂), le score de mode de consommation de contenu multimédia (S₃) et le score de contexte externe (S₄) à partir d'un autre dispositif (3, 4).

7. Procédé selon l'une des revendications 1 à 6, dans lequel le score sémantique (S₁) est déterminé en fonction de préférences utilisateur stockées dans une base de données utilisateur.

8. Programme informatique comprenant des instructions adaptées pour exécuter le procédé selon l'une des revendications 1 à 7 lorsque ledit programme est exécuté par un ordinateur.

9. Dispositif de sélection (6) pour sélectionner des flux multimédia à transmettre à au moins un terminal utilisateur, comprenant :
- un dispositif d'estimation de valeur de flux multimédia (14) pour déterminer des valeurs et un débit pour des flux multimédias d'un premier ensemble de flux multimédias demandés par l'au moins un terminal utilisateur (4),
- un dispositif de sélection de flux multimédia (17) pour déterminer un deuxième ensemble de flux multimédia à partir du premier ensemble de flux multimédia, de sorte qu'un débit total des flux multimédias du deuxième ensemble soit inférieur à une bande passante disponible d'une liaison de données vers ledit au moins un terminal utilisateur, et de sorte à maximiser la valeur totale des flux multimédias du deuxième ensemble, et
- un module d'application de sélection (19) pour commander la transmission des flux multimédia du deuxième ensemble vers l'au moins un terminal utilisateur (6),
dans lequel le dispositif d'estimation de valeur de flux multimédia (14) est configuré pour déterminer la valeur d'un flux multimédia en fonction d'un score sémantique (S₁), d'un score de distribution de contenu (S₂), d'un score de mode de consommation de contenu multimédia (S₃) et d'un score de contexte externe (S₄), dans lequel :
- le score sémantique (S₁) est déterminé en fonction de données sémantiques représentatives du contenu du flux multimédia,
- le score de distribution de contenu (S₂) est déterminé en fonction du fait que le contenu du flux multimédia est enregistré ou est en direct, et en fonction du fait qu'un autre flux multimédia ayant le même contenu mais une résolution différente est disponible,
- le score de mode de consommation de contenu multimédia (S₃) est déterminé en fonction de caractéristiques techniques du terminal utilisateur, d'une résolution utilisée pour afficher le flux multimédia sur le terminal utilisateur et de données représentatives du fait que le flux multimédia est effectivement visible sur le terminal utilisateur, et
- le score de contexte externe (S₄) est déterminé en fonction d'au moins une ID utilisateur, du fait qu'un utilisateur est détecté en train de regarder le terminal utilisateur et d'un prix de vente du flux multimédia.
